# EUROPEAN PATENT APPLICATION

(11) **EP 2 728 056 A1**
(43) Date of publication of application: **07.05.2014**
(21) Application number: 12822453.2
(22) Date of filing: 10.08.2012
(51) Int. Cl.: D06F 39/08, C02F 1/48, D06F 33/06, D06F 39/12

(54) **WASHER FOR SUPPLYING MAGNETIZED WATER**

(30) Priority: 10.08.2011 KR 20110079518
(71) Applicant: Daewoo Electronics Corporation, Seoul 100-031 (KR)
(72) Inventor: MIN, Ga Young, Bucheon-si Gyeonggi-do 420-730 (KR)
(74) Representative: Michalski Hüttermann & Partner Patentanwälte
(86) International application number: PCT/KR2012/006383
(87) International publication number: WO 2013/022305

(57) **Abstract**

A washer for supplying magnetized water includes a cabinet; a magnetization unit in the cabinet, generating a magnetic field; and a guide unit connected to the magnetization unit, guiding the wash water discharged from the magnetization unit. The magnetization unit includes a housing having a water flow channel through which wash water passes; a hot water supply nozzle connected to one side of the housing, having a hot water supply channel communicating with the water flow channel; and a cold water supply nozzle connected to the one side of the housing, having a cold water supply channel communicating with the water flow channel and separate from the hot water supply channel.

## Description

### [Technical Field]

The present invention relates to a washer for supplying magnetized water, and more particularly, to a washer for supplying magnetized water that is capable of improving washing power by changing the physical properties of wash water entering the washer, and reducing the cost of installing a magnetization unit for magnetizing wash water.

### [Background Art]

In general, a washer uses an electric motor as a primary power unit, and performs washing, rinsing and spin-drying processes to remove stains from laundry items using water and detergent. The washer includes an electric motor serving as a power unit, a mechanical unit to transmit energy to laundry items, a control unit to control the washing process, and a water supply and drain device to supply and discharge water.

Depending on the washing methods, washers are classified into an agitator-type washer, a pulsator-type washer, and a drum-type washer. The agitator-type washer washes laundry items by rotating a wing-shaped agitator in the center of a washing tub, and the pulsator-type washer washes the laundry items using waves generated by rotating a disk-shaped pulsator. The drum-type washer includes a drum having a plurality of protrusions formed thereon. When the drum containing laundry items, wash water and detergent is rotated around a horizontal axis, the laundry items are lifted by a lifter. Then, the laundry items are washed by an impact that occurs when the laundry items fall.

A water supply device related to such a washer has been proposed in Korean Patent Laid-open Publication No. 10-2007-0064002, entitled "Water supply device for drum washer."

### [Disclosure]

### [Technical Problem]

In a conventional washer, when wash water that contains a lime material is supplied to the washer, the lime material may adhere to a water supply pipe and may cause the pipe to become clogged.

Furthermore, since wash water containing a lime material does not smoothly mix with detergent, more detergent than a reference amount necessary may be required in the washer. For this reason, detergent may remain in laundry items after the washing operation.

Therefore, there is a demand for a structure capable of solving such problems.

The present invention is conceived to solve such problems of the related art, and an aspect of the invention is to provide a washer for supplying magnetized water, that is capable of affecting wash water containing a lime material to prevent foreign matter from adhering to a pipe, improving washing power, and reducing the cost of installing a magnetization unit for the wash water.

### [Technical Solution]

According to an aspect of the invention, a washer for supplying magnetized water includes a cabinet; a magnetization unit in the cabinet and generating a magnetic field; and a guide unit connected to the magnetization unit and guiding the wash water discharged from the magnetization unit. The magnetization unit includes a housing having a water flow channel through which wash water passes; a hot water supply nozzle connected to one side of the housing and having a hot water supply channel communicating with the water flow channel; and a cold water supply nozzle connected to the one side of the housing and having a cold water supply channel communicating with the water flow channel and separate from the hot water supply channel.

The magnetization unit may further include a magnet in the housing and generating the magnetic field; and a cover that surrounds the magnet and blocks contact between the magnet and the wash water that passes through the water flow channel.

The magnetization unit may further include a hot water discharge nozzle connected to another side of the housing and having a hot water discharge channel communicating with the water flow channel; and a cold water discharge nozzle connected to the other side of the housing and having a cold water discharge channel communicating with the water flow channel and separate from the hot water discharge channel.

The guide unit may include a hot water valve connected to the hot water discharge nozzle and controlling a flow of the wash water to the hot water discharge nozzle; and a cold water valve connected to the cold water discharge nozzle and controlling a flow of the wash water to the cold water discharge nozzle.

The guide unit may further include a temperature sensor configured to measure temperature of wash water supplied by at least one of the hot water supply nozzle and the cold water supply nozzle.

The temperature sensor may be installed in the housing.

The temperature sensor may transmit the measured temperature to a control unit, and the control unit may control opening and closing of the hot water valve and the cold water valve based on the measured temperature.

When the measured temperature is higher than a maximum value of a preset temperature range, the control unit may open the hot water valve and simultaneously close the cold water valve.

When the measured temperature is lower than a minimum value of the preset temperature range, the control unit may open the cold water valve and simultaneously close the hot water valve.

The washer may further include a bracket detachably coupled to the cabinet configured to support and secure the magnetization unit to the cabinet.

The washer may further include a bracket detachably coupled to the cabinet and supporting the guide unit, and fixing the guide unit to the cabinet.

### [Advantageous Effects]

According to an embodiment of the invention, the wash water passes through the magnetization unit, and the properties of wash water containing a lime material may change, which makes it possible to prevent the lime material from adhering to a pipe.

Furthermore, since the washing power of the wash water may improve, the amount of detergent to be used may be reduced, and the flexibility of laundry items may improve and reduce the use of fabric conditioner.

Furthermore, wash water in the entire temperature range may pass through one magnetization unit. Thus, the cost of installing the magnetization unit for the wash water may be reduced.

### [Description of Drawings]

The above and other aspects, features and advantages of the invention will become apparent from the following detailed description in conjunction with the accompanying drawings, in which:
FIG. 1 is a diagram illustrating main parts of a washer for supplying magnetized water in accordance with an embodiment of the present invention;
FIG. 2 is a perspective view of the main parts of the washer for supplying magnetized water in accordance with an embodiment of the present invention;
FIG. 3 is a schematic cross-sectional view of a magnetization unit in the washer for supplying magnetized water in accordance with an embodiment of the present invention;
FIG. 4 is a diagram illustrating a directional flow of the hot water that is supplied to the washer for supplying magnetized water in accordance with an embodiment of the present invention;
FIG. 5 is a diagram illustrating a directional flow of the cold water that is supplied to the washer for supplying magnetized water in accordance with an embodiment of the present invention;
FIG. 6 is a diagram illustrating a directional flow of the hot water and cold water that are simultaneously supplied to the washer for supplying magnetized water in accordance with an embodiment of the present invention; and
FIG. 7 is a block diagram illustrating a control flow of the washer for supplying magnetized water in accordance with an embodiment of the present invention.

### [Best Mode]

Embodiments of the invention will hereinafter be described in detail with reference to the accompanying drawings. It should be noted that the drawings are not to a precise scale and may be exaggerated in thickness of lines or sizes of components for descriptive convenience and clarity only. Furthermore, the terms as used herein are defined by taking functions of the invention into account and can be changed according to the custom or intention of users or operators. Therefore, definition of the terms should be made according to the overall disclosures set forth herein.

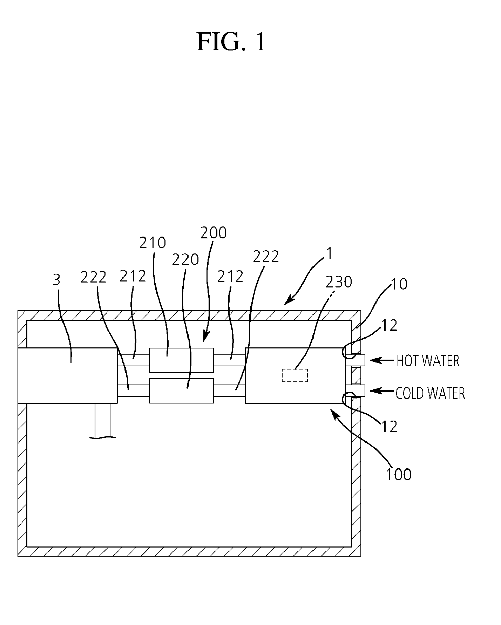

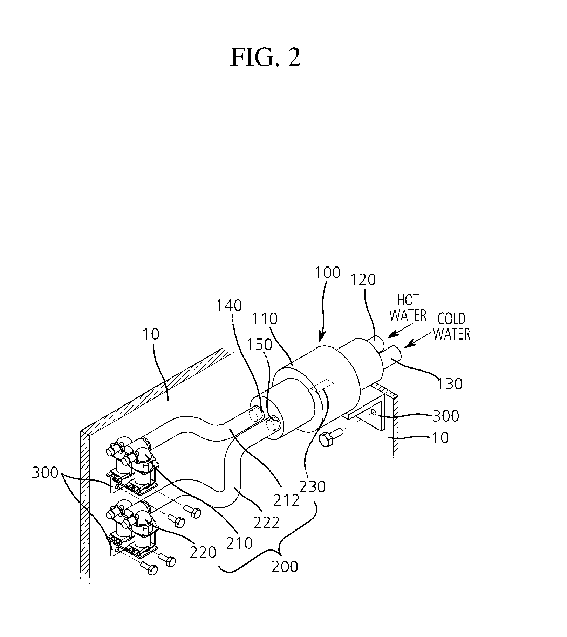

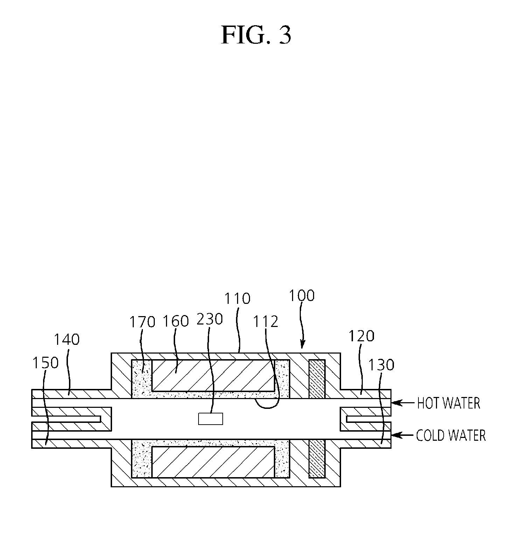

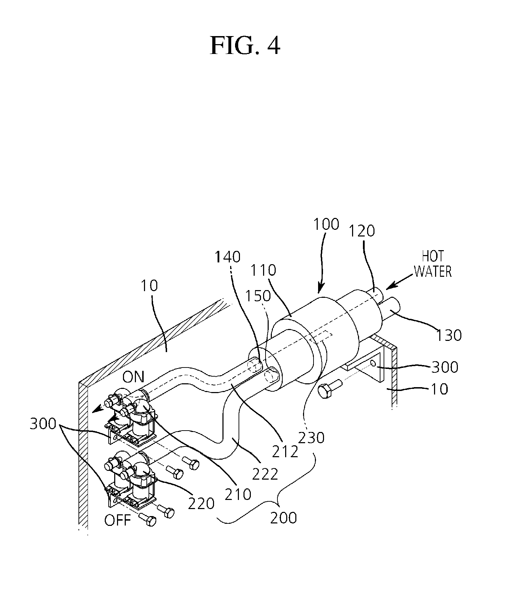

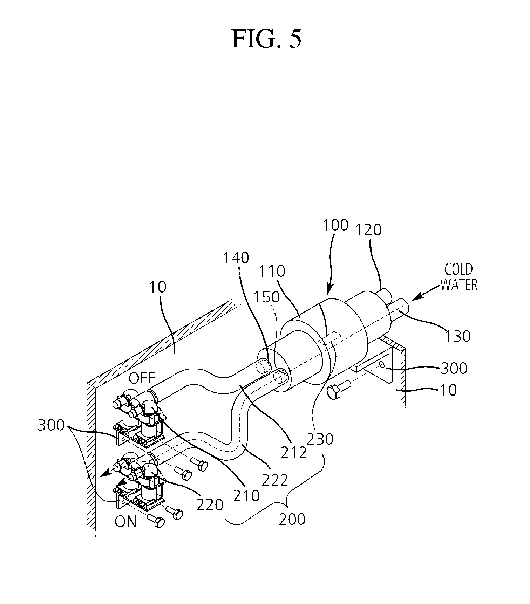

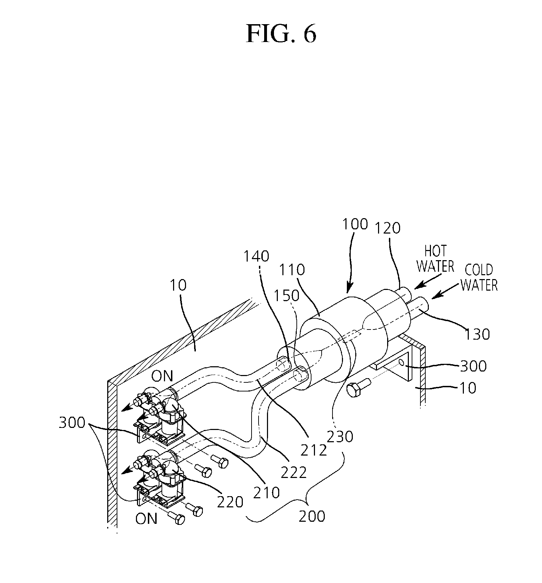

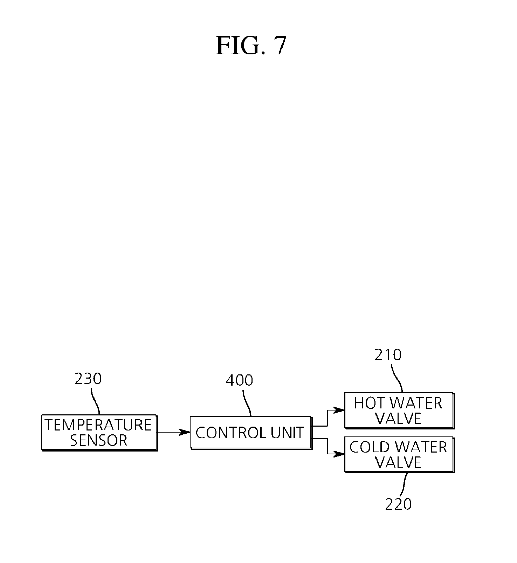

FIG. 1 is a diagram illustrating main parts of a washer for supplying magnetized water in accordance with an embodiment of the present invention. FIG. 2 is a perspective view of the main parts of the washer for supplying magnetized water in accordance with an embodiment of the present invention. FIG. 3 is a schematic cross-sectional view of a magnetization unit in the washer for supplying magnetized water in accordance with an embodiment of the present invention. FIG. 4 is a diagram illustrating a directional flow of the hot water that is supplied to the washer for supplying magnetized water in accordance with an embodiment of the present invention. FIG. 5 is a diagram illustrating a directional flow of the cold water that is supplied to the washer for supplying magnetized water in accordance with an embodiment of the present invention. FIG. 6 is a diagram illustrating a directional flow of the hot water and cold water that are simultaneously supplied to the washer for supplying magnetized water in accordance with an embodiment of the present invention. FIG. 7 is a block diagram illustrating a control flow of the washer for supplying magnetized water in accordance with an embodiment of the present invention.

Referring to FIGS. 1 and 2, the washer 1 for supplying magnetized water in accordance with an embodiment of the present invention includes a cabinet 10, a magnetization unit 100, a guide unit 200, and brackets 300a and 300b.

The washer 1 for supplying magnetized water in accordance with an embodiment of the present invention may be an agitator-type washer, a pulsator-type washer, or a drum-type washer.

When the washer 1 for supplying magnetized water in accordance with an embodiment of the present invention is a drum-type washer, the washer 1 for supplying such water may further include a tub (not illustrated) containing the wash water and a rotatable drum (not illustrated) in the tub. In the present embodiment, the detailed structures of the tub and the drum which are installed in the cabinet 10 are not illustrated for convenience of description.

The cabinet 10 forms the exterior of the washer 1.

The magnetization unit 100 is installed in the cabinet 10 and connected to an external supply source of wash water. The wash water supplied from the external supply source is transferred to an inlet box 3 through the magnetization unit 100 and the guide unit 200. The inlet box 3 is a box for containing detergent, rinsing agent, fabric conditioner, or the like, and is opened and closed at a front side of the cabinet 10.

Since the magnetization unit 100 is installed in the cabinet 10, one end (the left end of FIG. 1) of the magnetization unit 100 is positioned inside the cabinet 10, and another end (the right end of FIG. 1) of the magnetization unit 100 is positioned outside the cabinet 10.

Since the other end of the magnetization unit 100, or specifically, a hot water supply nozzle 120 and a cold water supply nozzle 130 are exposed to the outside of the cabinet 10, the magnetization unit 100 may be easily connected to the external supply source of the wash water.

The cabinet 10 has an insertion hole 12 through which the magnetization unit 100 passes. In accordance with the embodiment of the present invention, since the hot water supply nozzle 120 and the cold water supply nozzle 130 of the magnetization unit 100 pass through the cabinet 10, the cabinet 10 has two insertion holes 12 formed therein.

One of the two insertion holes 12 has the same diameter as an outer diameter of the hot water supply nozzle 120, and the other of the two insertion holes 12 has the same diameter as an outer diameter of the cold water supply nozzle 130.

Thus, it is possible to prevent the magnetization unit 100 from separating from the cabinet 10 after the water magnetization unit 100 is installed through the insertion holes 12, even though vibrations occur due to the operation of the washer.

The washer 1 for supplying water through a magnetic field may include one or more magnetization units 100. In the present invention, one magnetization unit 100 is installed.

The magnetization unit 100 generates a magnetic field that may change the properties of wash water containing a lime material. Thus, the lime material in the wash water supplied from the external water supply source may be prevented from decreasing the solubility of the detergent. Furthermore, the lime material may be prevented from adhering to the tub or the drum.

Referring to FIG. 3, the magnetization unit 100 may change the properties of wash water containing a lime material or the like, using a magnetic field.

The lime material contains calcium hydrogen carbonate (2CaHCO₃(aq)), and the calcium hydrogen carbonate may disproportionate into limestone (2CaCO₃(s)) + water (H₂O(l)) + carbon dioxide (CO₂(g)), while passing through a magnetic field of the magnetization unit 100.

The lime material may change to a "soft" state and pass through the magnetization unit 100, and may not adhere on the internal surface of a hose through which wash water flows. That is, the calcium hydrogen carbonate in the lime material may disproportionate into calcium carbonate, water and carbon dioxide and pass through the magnetization unit 100. The cohesion between particles may decrease, and a specific volume for adhering detergent on the surface may decrease. Therefore, the solubility of the detergent in the wash water may be maximized, and the lime material may not adhere to the surface of the hose or drum. The lime material may be discharged to the outside when the wash water from the tub is discharged.

In other words, since a molecular structure in the wash water that passes through the magnetization unit 100 may be modified, the wash water may be activated to increase the washing power and flexibility for laundry items.

The magnetization unit 100 includes a housing 110, a hot water supply nozzle 120, a cold water supply nozzle 130, a hot water discharge nozzle 140, a cold water discharge nozzle 150, a magnet 160, and a cover body 170.

The housing 110 has a water flow channel 112 formed therein, through which the wash water passes. The hot water supply nozzle 120 and the cold water supply nozzle 130 are connected to one end (the right end of FIG. 3) of the housing 110.

As the hot water supply nozzle 120 and the cold water supply nozzle 130 are connected to the housing 110, one end (the right end of FIG. 3) of the water flow channel 112 communicates with a hot water supply channel 121 in the hot water supply nozzle 120 and a cold water supply channel 131 in the cold water supply nozzle 130.

The hot water supply channel 121 guides the hot water supplied from an outside source to the water flow channel 112, and the cold water supply channel 131 guides cold water from the outside source to the water flow channel 112. In the present embodiment, the wash water can be hot water, cold water or a mixture of hot water and cold water.

The hot water supply nozzle 120 is connected to a hot water faucet (not illustrated) to receive hot water, and the cold water supply nozzle 130 is connected to a cold water faucet (not illustrated) to receive cold water. Thus, the hot water supply nozzle 120 and the cold water supply nozzle 130 may be connected to the external supply source through various connectors such a hose and the like.

The housing 110 may include one or more hot water supply nozzles 120 and one or more cold water supply nozzles 130. In the present embodiment, one hot water supply nozzle 120 and one cold water supply nozzle 130 are in the housing 110.

The hot water supply nozzle 120 and the cold water supply nozzle 130 may be integrated with the housing 110, and may be detachably coupled to the housing 110.

The hot water discharge nozzle 140 and the cold water discharge nozzle 150 are connected to the other end (the left end of FIG. 3) of the housing 110.

As the hot water discharge nozzle 140 and the cold water discharge nozzle 150 are connected to the housing 110, the other end (left end of FIG. 3) of the water flow channel 112 communicates with the hot water discharge channel 141 in the hot water discharge nozzle 140 and the cold water discharge channel 151in the cold water discharge nozzle 150.

The hot water discharge channel 141 discharges hot water that has passed through a magnetic field in the housing 110, to a hot water valve 210, and the cold water discharge channel 151 discharges cold water that has passed through a magnetic field in the housing 110 to a cold water valve 220.

The housing 110 may include one or more hot water discharge nozzles 140 and one or more cold water discharge nozzles 150. In the present embodiment, one hot water discharge nozzle 140 and one cold water discharge nozzle 150 are in the housing 110.

The hot water discharge nozzle 140 and the cold water discharge nozzle 150 may be integral with the housing 110, or may be detachably coupled to the housing 110.

One end of the water flow channel 112 communicates with the hot water supply channel 121 and the cold water supply channel 131, and the other end of the water flow channel 112 communicates with the hot water discharge channel 141 and the cold water discharge channel 151. In the present embodiment, the housing 110 has a tubular shape and a hollow portion forming the water flow channel 112 therein.

In the present embodiment, one water flow channel 112 is present. However, two water flow channels 112 may be present to separate the flow of hot water and cold water.

The magnet 160 is provided in the housing 110. More specifically, the magnet 160 is installed in a depressed portion of the inner surface of the housing 110. The cover 170 prevents contact between the magnet 160 and the wash water.

The water flow channel 112 in the housing 110 has the same diameter at one end (the right end of FIG. 3) of the housing 110, the portion at which the magnet 160 and the cover170 are installed, and the other end (the left end of FIG. 3) of the housing 110. Thus, the wash water through the water flow channel 112 may flow smoothly and have a constant flow rate.

The magnet 160 may include a permanent magnet such as a neodymium magnet having a strong magnetic field. Thus, the magnet 160 applies a magnetic field to the wash water passing through the water flow channel 112 and may changes the properties of the wash water. At this time, the number, shape, and magnetic force of the magnet 160 are not limited.

The cover170 surrounds the magnet 160, thereby preventing contact between the magnet 160 and the wash water. Thus, it is possible to prevent oxidation of the magnet 160, which may occur when the magnet 160 comes in contact with wash water.

The cover170 is installed in a depressed portion of the inner surface of the housing 110, similar to the magnet 160. Thus, it is possible to provide the water flow channel 112 with a constant diameter inside the housing 110.

Since the cover 170 comprises a plastic material, the cover 170 does not corrode or oxidize even though the cover 170 comes into contact with the wash water.

Referring to FIGS. 1 to 2, the guide unit 200 guides the wash water discharged from the magnetization unit 100. That is, the guide unit 200 guides hot water to the housing 110 and through the magnetic field to the hot water valve 210, and guides cold water to the housing 110 and through the magnetic field, to the cold water valve body 220.

The guide unit 200 is connected to the magnetization unit 100. The guide unit 200 includes the hot water valve 210, the hot water pipes 212, the cold water valve 220, the cold water pipes 222, and a temperature sensor 230.

As such, the guide unit 200 connected to the magnetization unit 100 includes both the hot water valve 210 and the cold water valve 220. Thus, although only one magnetization unit 100 is installed in the washer 1 for supplying magnetized water through a magnetic field, the washer 1 may pass hot wash water, cold wash water, and warm wash water through a magnetic field. Thus, it may be possible to reduce a cost of installing the magnetization unit 100, and increase the flexibility in the arrangement of parts in the cabinet 10. In other words, a magnetization unit for magnetizing hot wash water, a magnetization unit for magnetizing cold wash water, and a magnetization unit for magnetizing warm wash water do not need to be separately provided, but the washer 1 may magnetize wash water in the entire temperature range through only one magnetization unit.

The hot water valve 210 is connected to the magnetization unit 100. The hot water valve 210 passes hot water from the magnetization unit 100 to the inlet box 3. Furthermore, the hot water valve 210 also controls the flow of hot water.

The hot water valve 210 has an inlet and outlet connected to the hot water pipe 212. The hot water pipe 212 connects to the inlet of the hot water valve 210 and the hot water discharge nozzle 140 of the magnetization unit 100. Thus, the hot water that passes by the magnet 160 is transferred to the hot water valve 210 through the hot water discharge channel 141 and the hot water pipe 212. Subsequently, the hot water is supplied to the inlet box 3 from the hot water pipe 212 connected to the outlet of the hot water valve 210.

As such, the hot water is magnetized while passing through the magnetization unit 100 is subsequently guided to the hot water valve 212 through the hot water pipe 212.

The cold water valve 220 is connected to the magnetization unit 100. The cold water valve 220 passes cold water from the magnetization unit 100 to the inlet box 3. Furthermore, the cold water valve 220 also serves to control the flow of cold water.

The cold water valve 220 has an inlet and outlet connected to the cold water pipe 222. The cold water pipe 222 connects to the inlet of the cold water valve 220 and the cold water discharge nozzle 150 of the magnetization unit 100. Thus, the cold water that passes by the magnet 160 is transferred to the cold water valve 220 through the cold water discharge channel 151 and the cold water pipe 222. Subsequently, the cold water is supplied to the inlet box 3 from the cold water pipe 222 connected to the outlet of the cold water valve 220.

As such, the cold water is magnetized while passing through the magnetization unit 100 and is subsequently guided to the cold water valve 220 through the cold water pipe 222.

The housing 110 may have one or more hot water valve bodies 210 and one or more cold water valve bodies 220. In the present embodiment, one hot water valve 210 and one cold water valve 220 are present.

The hot water discharge nozzle 140 and the cold water discharge nozzle 150 may be integrally formed with the housing 110, or may be detachably coupled to the housing 110.

FIG. 2 illustrates that the hot water pipes 212 and the cold water pipes 222 are directly connected to the housing 110. However, the present invention is not limited thereto. The hot water pipe 212 may diverge from the cold water pipe 222, and the cold water pipe 222 may diverge from the hot water pipe 212.

Furthermore, the hot water pipe 212 may be connected to the hot water valve 210 and the hot water discharge nozzle 140 in various manners, and the cold water pipe 222 may be connected to the cold water valve 220 and the cold discharge nozzle 150 in various manners.

The temperature sensor 230 generates a signal for opening both of the hot water valve 210 and the cold water valve 220, or selectively opening the hot water valve 210 or the cold water valve 220, according to a preset temperature value of the wash water. The temperature sensor 230 may be provided inside the magnetization unit 100.

In the present embodiment, the temperature sensor 230 is fixed in the housing 110 of the magnetization unit 100 and measures the temperature of the wash water supplied by the hot water supply nozzle 120 and the cold water supply nozzle 130 in real time.

The temperature sensor 230 transmits the measured temperature to the control unit 400. When the temperature measured by the temperature sensor 230 is higher than a maximum value of a preset temperature range, the control unit 400 determines the corresponding wash water to be hot water, and subsequently guides the wash water to the hot water valve 210. That is, the control unit 400 opens only the hot water valve 210 and closes the cold water valve 220, transferring the wash water only to the hot water valve 210.

On the other hand, when the temperature measured through the temperature sensor 230 is lower than a minimum value of the preset temperature range, the control unit 400 determines the corresponding wash water to be cold water, and subsequently guides the wash water only to the cold water valve 220. That is, the control unit 400 opens only the cold water valve 220 and closes the hot water valve 210, transferring the wash water only to the cold water valve 220.

When the temperature measured by the temperature sensor 230 is within the preset temperature range, the control unit 400 determines the corresponding wash water to be warm water, and subsequently guides the wash water to the hot water valve 210 and/or the cold water valve 220. That is, the control unit 400 may open the hot water valve 210 or the cold water valve 220, or open both of the hot water valve 210 and the cold water valve 220.

As the hot water supply nozzle 120 and the cold water supply nozzle 220 are connected through the insertion holes 12, the magnetization unit 100 may be attached to the cabinet 10. Furthermore, as the magnetization unit 100 is supported by the bracket 300a, the magnetization unit 100 may be more securely attached to the cabinet 10.

The bracket 300a to support the magnetization unit 100 is detachably coupled to the cabinet 10 through a fastening member. The bracket 300a to support the magnetization unit 100 may be integral with an outer circumference of the magnetization unit 100, or may be separately provided to support the magnetization unit 100.

The hot water valve 210 and the cold water valve 220 are attached to the cabinet 10 when supported by the bracket 300b.

The brackets 300b to support the hot water valve 210 and the cold water valve 220 are detachably coupled to the cabinet 10 through a fastening member. The brackets 300b to support the hot water valve 210 and the cold water valve 220 may be integral with the outer circumference surfaces of the hot water valve 210 and the cold water valve 220, respectively. Alternatively, the brackets 300b may be separately provided to support the hot water valve210 and the cold water valve 220, respectively.

In the present embodiment, the brackets 300a and 300b may be detachable from the cabinet 10 in various manners without the fastening members.

The operation principle of the washer 1 for supplying magnetized water through a magnetic field in accordance with an embodiment of the present invention will be described as follows.

Referring to FIG. 4, when wash water is supplied to the water flow channel 112 through the hot water supply nozzle 120 of the magnetization unit 100, the temperature sensor 230 installed in the housing 110 measures the temperature of the wash water, and transmits the measured temperature to the control unit 400.

When the measured temperature is higher than the maximum value of the preset temperature range, the control unit 400 determines the corresponding wash water to be hot water. Thus, the control unit 400 guides the wash water only to the hot water valve 210. That is, the control unit 400 opens only the hot water valve 210 and closes the cold water valve 220, transferring the wash water only to the hot water valve 210.

Thus, the hot water flows into the inlet box 3 through the hot water pipe 212 via the hot water valve 210. In FIG. 4, a dotted line indicates the flow of hot water.

Referring to FIG. 5, when the wash water is supplied to the water flow channel 112 through the cold water supply nozzle 130 of the magnetization unit 100, the temperature sensor 230 measures the temperature of wash water and subsequently transmits the measured temperature to the control unit 400.

When the measured temperature is lower than the minimum value of the preset temperature range, the control unit 400 determines the corresponding wash water to be cold water. Thus, the control unit 400guides the wash water only to the cold water valve 220. That is, the control unit 400 opens only the cold water valve 220 and closes the hot water valve 210, transferring the wash water only to the cold water valve 220.

Thus, the cold water flows into the inlet body 3 through the cold water pipe 222 via the cold water valve 220. In FIG. 5, a dotted line indicates the flow of cold water.

Referring to FIG. 6, when wash water is supplied to the water flow channel 112 through the hot water supply nozzle 120 and the cold water supply nozzle 130 of the magnetization unit 100, the temperature sensor 230 measures the temperature of the wash water, and subsequently transmits the measured temperature to the control unit 400.

When the measured temperature is within the preset temperature range, the control unit 400 determines the corresponding wash water to be warm water. Thus, the control unit 400 guides the wash water to the hot water valve 210 and/or the cold water valve 220.

That is, when the wash water is determined to be warm water, the control unit 400 not only may open the hot water valve 210 or the cold water valve 220 to guide the wash water to the in-let body 3, but also may open both of the hot water valve 210 and the cold water valve 220 to guide the wash water to the inlet box 3.

In FIG. 6, a solid line indicates the flow of hot water, a dotted line indicates the flow of cold water, and a dashed dotted line indicates the flow of warm wash water in which hot water and cold water are mixed.

Although some embodiments have been provided to illustrate the invention in conjunction with the drawings, it will be apparent to those skilled in the art that the embodiments are given by way of illustration only, and that various modifications and equivalent embodiments can be made without departing from the spirit and scope of the invention. The scope of the invention should be limited only by the accompanying claims.

## Claims

1. A washer for supplying magnetized water, comprising:
a cabinet;
a magnetization unit in the cabinet and generating a magnetic field; and
a guide unit connected to the magnetization unit and guiding wash water discharged from the magnetization unit,
wherein the water magnetization unit comprises:
a housing having a water flow channel through which wash water passes;
a hot water supply nozzle connected to one side of the housing and having a hot water supply channel communicating with the water flow channel; and
a cold water supply nozzle connected to the one side of the housing and having a cold water supply channel communicating with the water flow channel, separate from the hot water supply channel.

2. The washer of claim 1, wherein the magnetization unit further comprises:
a magnet in the housing and generating the magnetic field; and
a cover surrounding the magnet and preventing contact between the magnet and wash water flowing through the water flow channel.

3. The washer of claim 1 or 2, wherein the magnetization unit further comprises:
a hot water discharge nozzle connected to another side of the housing and having a hot water discharge channel communicating with the water flow channel; and
a cold water discharge nozzle connected to the other side of the housing and having a cold water discharge channel communicating with the water flow channel and separate from the hot water discharge channel.

4. The washer of claim 3, wherein the guide unit comprises:
a hot water valve connected to the hot water discharge nozzle and controlling a flow of wash water supplied from the hot water discharge nozzle; and
a cold water valve connected to the cold water discharge nozzle and controlling a flow of wash water supplied to the cold water discharge nozzle.

5. The washer of claim 4, wherein the guide unit further comprises a temperature sensor configured to measure a temperature of the wash water from at least one of the hot water supply nozzle and the cold water supply nozzle.

6. The washer of claim 5, wherein the temperature sensor is in the housing.

7. The washer of claim 5, wherein the temperature sensor transmits the measured temperature to a control unit, and the control unit opens and closes the hot water valve and the cold water valve based on the measured temperature.

8. The washer of claim 7, wherein when the measured temperature is higher than a maximum value of a preset temperature range, the control unit opens the hot water valve and simultaneously closes the cold water valve.

9. The washer of claim 7, wherein when the measured temperature is lower than a minimum value of the preset temperature range, the control unit opens the cold water valve and simultaneously closes the hot water valve.

10. The washer of claim 1, further comprising a first bracket detachably coupled to the cabinet, supporting the magnetization unit, and fixing the magnetization unit to the cabinet.

11. The washer of claim 1, further comprising a bracket detachably coupled to the cabinet, supporting the guide unit, and fixing the guide unit to the cabinet.
